(19) **Europäisches Patentamt**

**European Patent Office**

**Office européen des brevets**

(11) **EP 1 281 682 A2**

(12) **EUROPEAN PATENT APPLICATION**

(43) Date of publication:
**05.02.2003 Bulletin 2003/06**

(51) Int Cl.$^7$: **C03B 37/014**

(21) Application number: **02013547.1**

(22) Date of filing: **19.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.07.2001 JP 2001229239**

(71) Applicant: **THE FURUKAWA ELECTRIC CO., LTD.**
**Tokyo (JP)**

(72) Inventors:
• **Shimotakahara, Iwao**
**The Furukawa Electric Co.,Ltd.**
**Tokyo (JP)**

• **Moridaira, Hideya**
**The Furukawa Electric Co., Ltd.**
**Tokyo (JP)**
• **Tamura, Junichi The Furukawa Electric Co., Ltd.**
**Tokyo (JP)**

(74) Representative: **Modiano, Guido, Dr.-Ing. et al**
**Modiano, Josif, Pisanty & Staub,**
**Baaderstrasse 3**
**80469 München (DE)**

(54) **Process for producing optical fiber preform by vapour axial deposition**

(57) Provided are a process for producing an optical fiber preform by depositing glass soot on the periphery of a glass rod and then sintering the glass soot to form a new transparent glass layer and also a process for producing an optical fiber preform by repeating the above procedures, wherein bubble is prevented from occurring in glass layers and interfaces between them. The process includes the steps of forming a glass soot layer by depositing glass soot on the periphery of a glass rod formed by undergoing a sintering heat treatment; and carrying out subsequently another heat treatment for the glass soot to carry out sintering thereof and transform the glass soot layer into a glass layer; wherein, provided that the glass soot is treated at a sintering temperature T'(°C) and that the glass rod is formed at a sintering temperature T(°C), the temperature T' is set to satisfy the following expression:

$$T'(°C) \leq T(°C) + 250(°C).$$

FIG. 1

EP 1 281 682 A2

**Description**

**BACKGROUND OF THE INVENTION**

Field of the Invention

The present invention relates to a process for producing an optical fiber preform by means of VAD (vapor axis deposition) process, more specifically to the process for producing an optical fiber preform causing no bubble and the like at each glass layer interface when a soot preform is sintered with heat treatment.

Prior Art

It has been of a recent discussion, in construction of an optical communication system utilizing optical fibers as optical transmission lines, to increase transmission capacity of the optical transmission lines.

In the light of increasing transmission capacity, it is essential for the optical fibers used as optical transmission lines that they can carry out single mode propagation of optical signals at the wavelengths of use. The reason is that multi mode propagation of optical signals causes mode dispersion based on delay of group velocity due to difference between each mode to induce deterioration of signal waveforms.

Accordingly, single mode fibers (SMF) each having a zero dispersion wavelength of around 1,300 nm are now coming into use for optical transmission line.

The SMF can achieve a transmission distance of more than 100 km at a wavelength of around 1,300 nm and also a transmission rate of as much as several hundreds of M bit/s.

Meanwhile, transmission loss occurring in a optical fiber generally assumes the minimum value when signal light has a working wavelength of around 1,550 nm. Therefore, it is desirable to operate optical transmission with signal light having such a wavelength so as to realize reduction in transmission loss, in turn, long-distance transmission.

Under such circumstances, there have been developed dispersion shifted fibers (DSF) having zero dispersion wavelengths of around 1,550 nm. The DSF has a cross-sectional configuration in which a plurality of annular glass layers having different refractive indices respectively are formed successively on the periphery of a center core having the highest refractive index, and the cross section has a step index profile. Use of such a DSF can increase the transmission rate to several G bit/s at the wavelength of around 1,550 nm.

Meanwhile, with increase in transmission capacity, the wavelength division multiplexing (WDM) transmission system is coming into wide use.

It is essential for the optical fibers to be employed in this WDM transmission system that they have no zero dispersion wavelength within the working wavelength region. A zero dispersion wavelength if present within the working wavelength region induces, for example, four wave mixing (FWM) as a nonlinear optical effect to increase noise interference in the optical fiber. There have been developed, as optical fibers to be used for WDM, non-zero dispersion shifted fibers (NZDSF), in which zero dispersion wavelengths are present outside the working wavelength region.

In the WDM transmission system, considering the case where the working wavelength region is of an ultra broad band, it is essential for the optical fibers employed as optical transmission lines that they each have dispersion as small as possible and dispersion slope as small as possible and that they each have a large effective core area (Acff) so that they can inhibit occurrence of nonlinear optical effects.

However, it is difficult for a single optical fiber to satisfy both of the requirements described above at the same time.

Thus, the optical transmission line is practically composed by combining two or more kinds of optical fibers. There are known optical transmission lines, for example, of the following constitutions: a combination of the SMF with a dispersion compensating fiber (DCF) for compensating dispersion in the SMF; and a combination of the DSF or NZDSF with a dispersion slope compensating fiber (DSCF) for compensating the dispersion and dispersion slope in the DSF or NZDSF.

Here, the index profiles of the DSF, NZDSF, DCF and DSCF each generally are like a step index profile, as described already for the DSF as exemplified above. The cross section of the optical fiber is composed of a center core having the maximum refractive index, a clad, and an annular region interposed between the center core and the clad. The annular region contains one or more glass layers having refractive indices which are different from one another.

The optical fiber having such a cross-sectional configuration is generally made of an optical fiber preform prepared after soot depositing process, sintering process and elongating process.

Preparation of the optical fiber preform having the refractive index profile like mentioned above is generally carried out as follows:

(1) First, a transparent glass rod is prepared as a core material, and it is set in a reactor.

(2) Next, glass soot formed by a burning reaction of a reaction gas containing, for example, $SiCl_4$, $O_2$, $H_2$ and Ar is deposited on the periphery of the glass rod to form a glass soot layer.

(3) Then, the thus formed glass rod is entirely subjected to heat treatment at a predetermined temperature to sinter the glass soot and transform the glass soot layer into a glass layer.

As a result, a new glass layer is formed on the periphery of the core transparent glass rod to provide a new glass rod.

Here, the refractive index of each new glass layer can be controlled by adding various kinds of dopants to the reaction gas to be supplied for forming the glass soot layer as an antecedent of the glass layer. For example, addition of $GeCl_4$ can increase refractive index of the glass layer; whereas addition of F (fluorine) can reduce the refractive index thereof.

(4) The glass rod newly formed as described above is used as a core material, and a glass soot layer is formed on the periphery of the core material, followed by heat treatment to transform the glass soot layer into a glass layer and form a new annular region (glass layer).

A plurality of annular regions of glass layers are formed successively on the periphery of the original core material by repeating the above procedures to provide the desired optical fiber preform.

Here, formation of each glass soot layer is followed by a sintering heat treatment thereof. Accordingly, when N glass layers (N is an integer of 2 or more) are to be formed on the periphery of a glass rod used as a core material, the formation of a glass soot layer and the heat treatment are repeated N times.

Incidentally, it is desirable, in the above procedures, that the glass rods newly formed are each time sintered and elongated to have suitably reduced diameters, respectively. The reason is that relative thickness of the glass layers can be adjusted even if a sintering furnace having a fixed inside diameter is used.

Further, the sintering heat treatment of the glass soot layer is usually carried out for 6 to 12 hours, and at an atmospheric pressure of about 40 to 60 Pa. While the sintering heat treatment temperature depends on the kind of dopant and the amount thereof, the sintering temperature of the glass soot drops if the amount of dopant Ge or F increases. For example, in the case of F-doped glass soot, the sintering temperature thereof is about 1,250°C. Incidentally, sintering temperature of pure silica soot is about 1,500°C.

In the method for producing a otical preform described above, bubble can occur within the glass layers formed or along the interface between each glass layer formed and the glass rod already sintered while repeating the procedures of forming a glass soot layer and heating the newly formed glass soot layer to carry out sintering thereof.

Particularly, when a glass soot layer doped with Ge or F to have a lowered sintering temperature is subjected to heat treatment at an unnecessarily high temperature for sintering thereof, bubble is likely to occur as described above. Such optical fiber preforms having bubbles are defective and cannot be used as materials to produce the desired optical fibers.

No typical solution has so far been disclosed for optimization of the sintering temperature for each glass soot layer so as to prevent bubble from occurring.

BRIEF DESCRIPTION OF THE DRAWING

Fig. 1 is an explanatory drawing showing the cross-sectional configuration of an exemplary optical fiber preform $A_1$ to be produced according to the process of the present invention and a refractive index profile thereof;

Fig. 2 is an explanatory drawing showing the cross-sectional configuration of another exemplary optical fiber preform $A_2$ to be produced according to the process of the present invention and a refractive index profile thereof;

Fig. 3 is an explanatory drawing showing the cross-sectional configuration of another exemplary optical fiber preform $A_3$ to be produced according to the process of the present invention and a refractive index profile thereof; and

Fig. 4 is an explanatory drawing showing the cross-sectional configuration of another exemplary optical fiber preform $A_4$ to be produced according to the process of the present invention and a refractive index profile thereof.

**OBJECT AND SUMMARY OF THE INVENTION**

It is an object of the present invention to provide a process for producing an optical fiber preform having no bubble and the like within glass layers to be formed or along the interface between the glass layers, when a glass soot layer formed on the periphery of a glass rod is sintered to be transformed to a new glass layer or when the procedures of forming a glass soot layer and sintering thereof are repeated to produce an optical fiber preform composed of a plurality of glass layers.

In order to attain the above object, the present invention provides a process for producing an optical fiber preform, including the steps of forming a glass soot layer by depositing glass soot on the periphery of a glass rod formed by undergoing a sintering heat treatment; and carrying out subsequently another heat treatment for the glass soot to sinter thereof and transform the glass soot layer into a glass layer; wherein, provided that the glass soot is treated at a sintering temperature T'($°$C) and that the glass rod is formed at a sintering temperature T($°$C), the temperature T' is set to satisfy the following expression:

$$T'(°C) \leq T(°C) + 250(°C) \tag{1}$$

(hereinafter referred to as a first production process).

Further, the present invention provides a process for producing an optical fiber preform, including the steps of forming a glass soot layer by depositing glass soot on the periphery of a glass rod formed by undergoing sintering heat treatment; and carrying out subsequently another heat treatment for the glass soot to sinter thereof and transform the glass soot layer into a glass layer; the above two steps being repeated N times (wherein N is an integer of 2 or more); wherein, provided that the temperature used for the Nth round sintering of the glass soot is $T_N(°C)$ and that the lowest temperature of the sintering temperatures used for forming the glass rod is $T_M(°C)$, $T_N$ is set to satisfy the following expression:

$$T_N(°C) \leq T_M(°C) + 250(°C) \tag{2}$$

(hereinafter referred to as a second production process).

## DETAILED DESCRIPTION

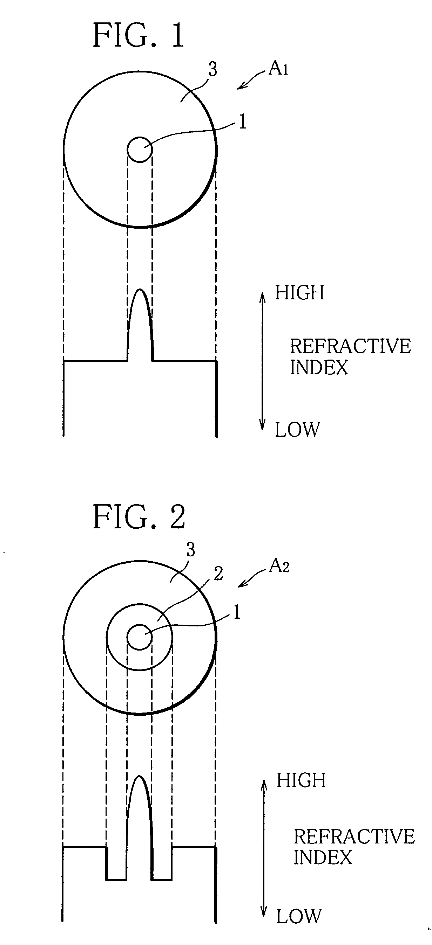

The first production process will now be described. An example of optical fiber preform $A_1$ to be obtained according to this process is shown in Fig. 1.

The optical fiber preform $A_1$ has a cross-sectional configuration containing a high-refractive index center core 1 and a low-refractive index clad 3.

This optical fiber preform $A_1$ is produced as follows:

The center core is a transparent glass rod, which is obtained, for example, by preparing a porous body formed of $GeO_2$-doped glass soot by means of VAD method and subjecting the porous body to heat treatment at a sintering temperature (T$°$C).

Subsequently, glass soot is deposited on the periphery of the glass rod to form a glass soot layer, and the resulting glass rod is entirely subjected to heat treatment at the sintering temperature (T'$°$C) of the glass soot to transform the glass soot layer into a transparent glass layer (clad) 3 and provide an optical fiber preform $A_1$.

Here, the temperature T' employed to sinter the glass soot layer is set to satisfy the expression (1) in relation to the sintering temperature T employed for forming the glass rod.

That is, the temperature T' is set to be T + 250($°$C) or lower, and the highest allowable temperature is T + 250($°$C). If the temperature T' fails to satisfy this relationship, bubble occurs mainly along the interface between the center core 1 and the clad 3 after the heat treatment at the temperature T' , providing defective optical fiber preform.

It goes without saying that the allowable lower limits of the temperatures T and T' are the minimum sintering temperatures of the glass soot layers to be treated, respectively.

Next, the second production process will be described. This process is applied for production of an optical fiber preform having two or more glass layers formed on the periphery of a glass rod used as a core material.

Fig. 2 shows a cross-sectional configuration of another example of optical fiber preform $A_2$ produced according to this process and a refractive index profile thereof.

The optical fiber preform $A_2$ has a cross-sectional configuration containing a center core 1, an annular region formed of a glass layer 2 on the periphery of the center core and a clad 3 on the periphery of the glass layer 2. The center core 1 is doped, for example, with Ge to have a higher refractive index than that of pure silica, whereas the glass layer 2 is doped, for example, with F to have a lower refractive index than that of pure silica. Meanwhile, the clad 3 is formed substantially with silica alone. The entire cross section of the perform $A_2$ assumes the step index profile, as shown in Fig. 2.

In preparation of this optical fiber preform $A_2$, a porous body for obtaining a center core is formed by means of VAD process like in the case of the optical fiber preform $A_1$, and then the porous body is subjected to heat treatment at a sintering temperature ($T_0°$C) to provide a center core 1 as a glass rod. Subsequently, F-doped glass soot is deposited on the periphery of the glass rod serving as center core 1 to form a glass soot layer as an antecedent of the glass layer 2. Then, the resulting glass rod is entirely subjected again to heat treatment at the sintering temperature ($T_1°C$) of the glass soot to transform the glass soot layer into a glass layer and provide a new glass rod.

Subsequently, silica soot alone is deposited on the periphery of the newly obtained glass rod to form a silica soot layer as an antecedent of the clad 3. The resulting glass rod is then entirely subjected to heat treatment at the sintering temperature ($T_2°C$) of the silica soot to sinter the silica soot and transform the silica soot layer into a glass layer (clad) 3, providing an optical fiber preform $A_2$ having the cross-sectional configuration as shown in Fig. 2.

As described above, when the glass layer 2 is to be formed in the present invention, the center core 1 already is turned into transparent glass rod. Meanwhile, when the clad 3 is to be formed, the center core 1 and the glass layer 2 are already turned into a transparent glass rod.

Thus, in producing an optical fiber preform $A_2$, heat treatment is repeated three times, i.e., the sintering treatment (at $T_0°C$) for forming the center core 1; the sintering treatment (at $T_1°C$) for forming the glass layer 2 as the annular region; and the sintering treatment (at $T_2°C$) for forming the clad 3. These sintering temperatures $T_0°C$, $T_1°C$ and $T_2°C$ are not necessarily the same but are generally different from one another depending on the kind of dopant and the amount thereof.

In the case where the temperature for the sintering treatment to be carried out in the subsequent step is notably high compared with the temperature employed in the previous sintering treatment, bubble frequently occurs along the layer interface. For example, when the temperature $T_2$ is extremely higher than the temperature $T_1$ in producing the optical fiber preform $A_2$, bubble occurs mainly along the interface between the glass layer 2 and the clad 3, providing a defective product.

Therefore, in the present invention, for example, the temperature $T_2$ is set such that it satisfies the following relationship with respect to the lowest of the temperatures $T_0$ and $T_1$ employed so far:

$$T_2 \leq T_1 + 250(°C),$$

wherein $T_1$ is assumed to be the lowest temperature.

In other words, the temperature $T_2$ is set to be not more than $T_1 + 250(°C)$, and its upper limit is $T_1 + 250(°C)$.

If the temperature $T_2$ fails to satisfy this relationship, bubble occurs mainly along the interface between the glass layer 2 and the clad 3.

The expression (2) generalizes the above relationship.

More specifically, in forming an annular region composed of a plurality of glass layers on the periphery of a center core, for example, in the case where a glass rod is already prepared by carrying out N-1 times of sintering treatments and where the Nth round formation of a glass soot layer and the Nth round sintering treatment are to be carried out successively, the expression (2) shows a basis of selection for the sintering temperature ($T_N°C$) in the Nth round sintering treatment.

The temperature $T_N$ is set to such a level as will satisfy the expression (2) with respect to the lowest sintering temperature ($T_M$) of those employed in the N-1 times of sintering treatments.

That is, the Nth round sintering temperature $T_N(°C)$ is set to be lower than $T_M + 250(°C)$, and its upper limit is $T_M + 250(°C)$.

If the temperature $T_N$ fails to satisfy this relationship, bubble occurs along the interface between the annular region, which has been sintered at the temperature $T_M$ in the Nth round sintering treatment and is already present as a transparent glass layer, and the glass layer in contact therewith.

EMBODIMENT

Embodiments 1 and 2, Comparative Example 1

In preparing an optical fiber preform $A_2$ having a cross-sectional configuration as shown in Fig. 2, sintering temperatures ($T_0$), ($T_1$) and ($T_2$) were set as shown in Table 1, wherein $T_0$ is the sintering temperature when a $GeO_2$-doped center core 1 was formed; $T_1$ is the sintering temperature when an F-doped glass layer (annular region) 2 was formed; and $T_2$ is the sintering temperature when a dopant-free pure silica clad 3 was formed.

The thus obtained optical fiber preform $A_2$ was visually observed to find whether bubble occurred or not therein. The results are summarized in Table 1.

Table 1

| | Sintering temperature (°C) | | | Results of visual observation |
|---|---|---|---|---|
| | $T_0$ | $T_2$ | $T_2$ | |
| Embodiment 1 | 1480 | 1300 | 1480 | No bubble occurred. |
| Embodiment 2 | 1450 | 1250 | 1480 | No bubble occurred. |
| Comparative Example 1 | 1480 | 1250 | 1520 | Bubble occurred within the annular region and on each side thereof. |

The results show clearly that in the case of Comparative Example 1, the lowest sintering temperature $T_M$ is $T_1 = 1,250°C$, and the third round sintering temperature $T_2$ is $1,520°C$. Therefore, the difference $T_2 - T_1 = 270°C$, which is higher than the upper limit $250°C$.

However, in the case of Embodiment 1, the temperature $T_M$ (corresponding to $T_1$) is $1,300°C$, and the third round sintering temperature ($T_2$) is $1,480°C$. The difference $T_2 - T_1 = 180°C$, which is lower than the upper limit $250°C$. In Embodiment 2, the temperature difference $T_2 - T_1 = 230°C$, which is also lower than the upper limit $250°C$.

Referring to the relationship between the sintering temperature and bubble, no bubble occurred in Embodiments 1 and 2, while it occurred in Comparative Example 1. Therefore, it can be understood that the relationship shown by the expression (2) is a requisite for preventing bubble.

Embodiments 3 and 4, Comparative Examples 2 and 3

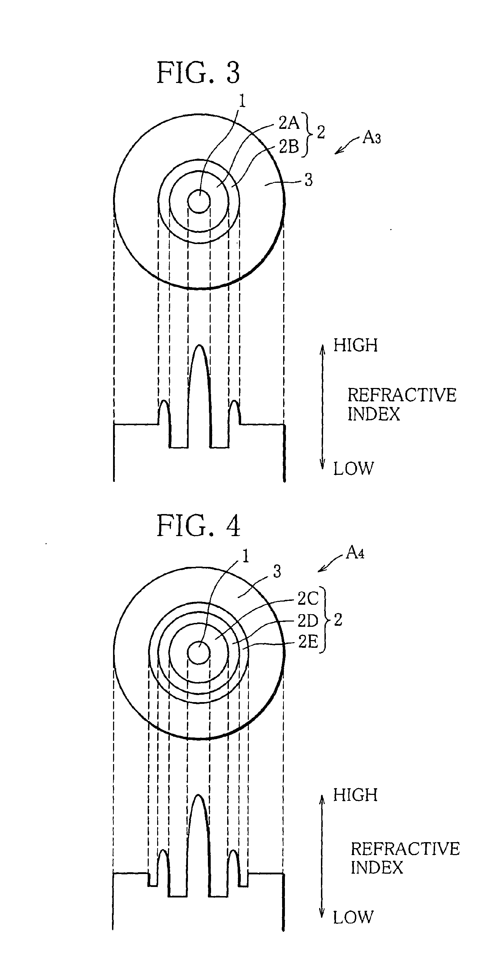

An optical fiber preform $A_3$ shown in Fig. 3 was produced.

The optical fiber preform $A_3$ contains a center core 1 and an annular region 2B formed of a glass layer that are doped with Ge to have higher refractive indices than that of pure silica respectively; an annular region 2A doped with F to have a lower refractive index than that of pure silica; and a clad 3 formed of pure silica.

It should be noted here that when the optical fiber preform $A_3$ is produced, the formation of a glass soot layer and the sintering treatment thereof are carried out in forming each of the center core 1, the annular region 2A, the annular region 2B and the clad 3. More specifically, when the annular region 2A is to be formed, the center core 1 has already been turned into transparent glass rod; when the annular region 2B is to be formed, the annular region 2A has already been subjected to sintering treatment; and when the clad 3 is to be formed, the annular region 2B has already been subjected to sintering treatment.

In preparing the optical fiber preform $A_3$, sintering temperatures ($T_0$), ($T_1$), ($T_2$) and ($T_3$) were set as shown in Table 2, wherein $T_0$ is the sintering temperature when the center core 1 was formed; $T_1$ is the sintering temperature when the annular region 2A was formed; $T_2$ is the sintering temperature when the annular region 2B was formed; and $T_3$ is the sintering temperature when the clad 3 was formed.

The thus obtained optical fiber preform $A_3$ was visually observed to find whether bubble occurred or not therein. The results are summarized in Table 2.

Table 2

| | Sintering temperature (°C) | | | | Results of visual observation |
|---|---|---|---|---|---|
| | $T_0$ | $T_1$ | $T_2$ | $T_3$ | |
| Embodiment 3 | 1480 | 1300 | 1480 | 1520 | No bubble occurred. |
| Embodiment 4 | 1450 | 1250 | 1450 | 1480 | No bubble occurred. |
| Comparative example 2 | 1480 | 1250 | 1480 | 1520 | Foaming occurred within the annular region 2A and on each side thereof, particularly along the interface with the annular region 2B. |
| Comparative example 3 | 1480 | 1250 | 1520 | 1480 | Bubble occurred within the annular region 2A and on each side thereof, particularly along the interface with the annular region 2B. |

In the case of Comparative Example 2, the temperature difference $T3 - T_1 = 270°C$, which is here again higher than the upper limit $250°C$. Meanwhile, in Comparative Example 3, the difference $T_2 - T_1 = 270°C$, which is also higher than the upper limit 250°C. Thus, bubble occurred within and on each side of the annular region 2A treated at the lowest sintering temperature.

Meanwhile, bubble was observed neither in Embodiment 3 nor in Embodiment 4 satisfying the relationship of the expression (2).

Embodiments 5 and 6. Comparative Examples 4 and 5

An optical fiber preform $A_4$ shown in Fig. 4 was produced.

The optical fiber preform $A_4$ contains a center core 1 and an annular region 2D formed of a glass layer that are doped with Ge to have higher refractive indices than that of pure silica respectively; annular regions 2C and 2E doped with F to have lower refractive indices than that of pure silica respectively; and a clad 3 formed of pure silica.

In preparing the optical fiber preform $A_4$, sintering temperatures $(T_0)$, $(T_1)$, $(T_2)$, $(T_3)$ and $(T_4)$ were set as shown in Table 3, wherein $T_0$ is the sintering temperature when the center core 1 was formed; $T_1$ is the sintering temperature when the annular region 2C was formed; $T_2$ is the sintering temperature when the annular region 2D was formed; $T_3$ is the temperature when the annular region 2E was formed; and $T_4$ is the sintering temperature when the clad 3 was formed.

The thus obtained optical fiber preform $A_4$ was visually observed to find whether bubble occurred or not therein. The results are summarized in Table 3.

Table 3

| | Sintering temperature (°C) | | | | | Results of visual |
|---|---|---|---|---|---|---|
| | $T_0$ | $T_2$ | $T_2$ | $T_3$ | $T_4$ | observation |
| Embodiment 5 | 1480 | 1300 | 1480 | 1250 | 1480 | No bubble occurred. |
| Embodiment 6 | 1450 | 1250 | 1450 | 1350 | 1480 | No bubble occurred. |
| Comparative example 4 | 1480 | 1250 | 1480 | 1350 | 1520 | Bubble occurred. |
| Comparative example 5 | 1480 | 1250 | 1520 | 1300 | 1520 | Bubble occurred. |

In Comparative Examples 4 and 5, the lowest sintering temperature was 1,250°C. However, the highest sintering temperature of 1,520°C was used later than the treatment at the lowest sintering temperature, so that Comparative Examples 4 and 5 failed to satisfy the relationship of the expression (2). Therefore, bubble was observed in the optical fiber preforms obtained in Comparative Examples 4 and 5.

Meanwhile, bubble was observed neither in Embodiment 5 nor in Embodiment 6 satisfying the relationship of the expression (2).

As is clear from the above description, when an optical fiber preform is produced by means of the process that each glass layer is formed on the periphery of a glass rod by forming a soot layer and transforming the soot layer into a glass layer, the present invention can prevent bubble from occurring along the interface between the glass layers formed successively on the periphery of a glass rod.

**Claims**

1. A process for producing an optical fiber preform, comprising the steps of:

   forming a glass soot layer by depositing glass soot on a periphery of a glass rod formed by undergoing a sintering heat treatment; and
   carrying out subsequently another heat treatment to sinter the glass soot thereof and transform the glass soot layer into a glass layer;

   wherein, provided that the glass soot is treated at a sintering temperature T'(°C) and that the glass rod is formed at a sintering temperature T(°C), the temperature T' is set to satisfy the following expression:

$$T'(°C) \leq T(°C) + 250(°C).$$

2. A process for producing an optical fiber preform, comprising the steps of:

forming a glass soot layer by depositing glass soot on a periphery of a glass rod formed by undergoing a sintering heat treatment; and
carrying out subsequently another heat treatment to sinter the glass soot thereof and transform the glass soot layer into a glass layer; the above two steps being repeated N times (wherein N is an integer of 2 or more);

wherein, provided that the temperature used for the Nth round sintering of the glass soot is $T_N(°C)$ and that the lowest temperature of the sintering temperatures used for forming each glass layer is $T_M(°C)$, the temperature $T_N$ is set to satisfy the following expression:

$$T_N(°C) \leq T_M(°C) + 250(°C).$$

# FIG. 1

HIGH

REFRACTIVE
INDEX

LOW

# FIG. 2

HIGH

REFRACTIVE
INDEX

LOW

## FIG. 3

## FIG. 4